(19) Europäisches Patentamt
European Patent Office
Office européen des brevets

(11) EP 2 024 130 B1

(12) **EUROPEAN PATENT SPECIFICATION**

(45) Date of publication and mention
of the grant of the patent:
**06.01.2010 Bulletin 2010/01**

(21) Application number: **07736335.6**

(22) Date of filing: **16.05.2007**

(51) Int Cl.:
**B23K 20/06** (2006.01)  **F16J 12/00** (2006.01)
**F17C 1/00** (2006.01)  **F17C 5/06** (2006.01)

(86) International application number:
**PCT/IL2007/000595**

(87) International publication number:
**WO 2007/132468 (22.11.2007 Gazette 2007/47)**

(54) **METHODS OF SEALING HIGH PRESSURE VESSELS USING MAGNETIC PULSING WITH HIGH RADIAL IMPACT SPEED**

VERFAHREN ZUR ABDICHTUNG VON HOCHDRUCKBEHÄLTERN UNTER VERWENDUNG VON MAGNETISCHER IMPULSGEBUNG MIT HOHER RADIALAUFPRALLGESCHWINDIGKEIT

PROCÉDÉS DE SCELLAGE DE RÉCIPIENTS SOUS HAUTE PRESSION PAR IMPULSIONS MAGNÉTIQUES À GRANDE VITESSE D'IMPACT RADIALE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **16.05.2006 US 801238 P**

(43) Date of publication of application:
**18.02.2009 Bulletin 2009/08**

(73) Proprietor: **Pulsar Welding Ltd.**
**43663 Raanana (IL)**

(72) Inventors:
• **GAFRI, Oren**
**75241 Rishon Le-zion (IL)**
• **LIVSHITZ, Yuri**
**75355 Rishon Le Zion (IL)**

(74) Representative: **Fleuchaus, Michael A. et al**
**Fleuchaus & Gallo Partnerschaft**
**Patent- und Rechtsanwälte**
**Sollner Straße 36**
**81479 München (DE)**

(56) References cited:
**EP-A- 1 649 963**    **WO-A-2005/002777**
**WO-A-2005/124929**    **US-A- 5 671 522**
**US-B1- 6 779 550**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

This invention relates to methods of sealing vessels by a pulsed magnetic force (PMF) according to the preamble of claims 1 and 6 (see, for example, US 5 671 522 for claim 1 and EP 1 649 963 for claim 6), and in particular, for sealing high pressure vessels.

**BACKGROUND OF THE INVENTION**

A vessel such as a container, canister, tank, flask, etc. used, for example, for gas and/or liquid storage is usually produced by manufacturing a vessel body portion and a cover portion separately. For sealing the vessel, welding, brazing, soldering or crimping methods can be used for coupling the cover portion to the vessel body portion.

**Welding** hereinafter refers to a process in which two opposite surfaces of first and second workpieces form a "true" metallurgical bond (intermolecular bond), i.e., such a physical joint when the first and second workpieces become integrated with one another owing to mutual diffusion of their atoms.

**Brazing** is a joining process whereby a non-ferrous filler metal or alloy is heated to melting temperature (usually above 450°C) and distributed between two or more close-fitting workpieces by capillary action. At its liquid temperature, the molten filler metal and flux interact with a thin layer of the base metal, cooling to form a sealed joint due to grain structure interaction. The brazed joint becomes a sandwich of different layers, each metallurgically bound to the adjacent layers.

**Soldering** refers to a process of joining metal parts using a filler material (solder) which has a melting temperature usually below 450°C. Soldering is distinguished from brazing by virtue of a lower melting-temperature filler metal; it is distinguished from welding by virtue of the base metal not melting during the joining process. In a soldering process, heat is applied to the parts to be joined, causing the solder to melt and be drawn into the joint by capillary action and to bond to the materials to be joined by wetting action.

In turn, **crimping** refers to such joining of two workpieces by deforming (or **swaging)** one or both of them to hold the other. As a result of crimping, a surface of at least one of the workpieces becomes wavy, bent, or pinched so as to provide a "pure" mechanical joint between the two workpieces without interpenetration of the atoms of the first workpiece into the body of the second workpiece.

Crimping is usually done by stamping or rolling. Moreover, various crimping techniques are also known in the art for sealing vessels, which utilize the force generated by a transient magnetic field.

For example, U.S. Pat. No. 3,581,456 to Gere describes a method for forming a closure on the neck finish of a filled container which utilizes the force generated by a transient magnetic field. The skirt of a cap, positioned on the neck of the container, is urged by the field against the neck fmish so as to cause the skirt to conform to the contours of the neck finish and to thereby hold the cap in engagement with the neck finish upon the neck of the container.

U.S. Pat. No. 4,934,552 to Koide et al. describes a method for producing a sealed vessel including a cylindrical body portion having an open end, and a cover fitting in the open end of the body portion. The sealed vessel is produced by pressing the open end of the body portion from the outside of the body portion to an outer peripheral surface of the cover provided with at least one of annular grooves around the outer peripheral surface of the cover. In the case of using an electromagnetic force as the means for press-working, a part of the body portion is strictly and air-tightly fixed to the annular grooves in a moment and thus the sealed vessel is produced.

U.S. Pat. No. 5,191,775 to Shiina et al. describes a technique for sealing a refrigerating-medium storage vessel which comprises a tubular body having a bottom and an open upper end portion, and a closure fitted in the open end portion. The open end portion is constricted and crimped by electromagnetic forming and is thereby secured to the closure by bending and matching groove. U.S. Pat. No. 5,191,775 states that the method does not employ welding for joining the closure to the body.

U.S. Pat. No. 5,671,522 to Aronne describes another swaging technique for sealing a container by magnetic pulse forming techniques. The container is closed by means of a pair of specially constructed end caps each having annular recesses formed around their circumference. The ends of the container are engaged within the recess and joined by magnetic pulse forming. The magnetic pulse force is asserted radially inward against a mandrel which mates with a depression formed in the caps.

It should be understood that the sealing of a gas storage vessel by crimping can be used for pressure vessels designed for pressure that does not exceed several bars, for example, for sealing pressure vessels used in refrigerators and air conditioning systems which are filled with chlorofluorocarbon (CFC) refrigerants, e.g., Freon. However, it is recognized that CFCs are global-warming and ozone-depleting chemicals that provide a harmful effect on the Earth's atmosphere. Specifically the ozone hole over the Antarctic was discovered, and heightened world attention led to the Montreal Protocol of 1989. Over the same period, it was discovered that CFCs also contributed significantly to the world's greenhouse warming problem. Thus, replacement of global-warming and ozone-depleting chemicals with environmentally friendly materials is now a major issue.

One of the solutions for mitigating the harmful effect of CFCs on the global atmosphere is to use environmentally friendly carbon dioxide as a refrigerant instead of conventional global-warming and ozone-depleting chemicals. Although carbon dioxide is a global-warming gas, conventional refrigerants (e.g., chlorofluorocarbons and hydrofluorocarbons) cause about 1000 times more global warming than the same quantity of carbon dioxide. Meanwhile, the tiny quantities of carbon dioxide that would be released from air conditioners would be insignificant, compared to the huge amounts produced from burning fossil fuels for energy and transportation.

One drawback to carbon dioxide air-conditioning systems is that they must be operated at high pressures, e.g., three times or higher as commonly seen in CFC technology. The need to operate at high pressure poses certain engineering challenges and requires the use of thick and heavy tubing. For example, when compared to a vessel filled with Freon, the wall thickness of a carbon dioxide filled vessel should be increased by 1.5 to 4.5 times.

The sealing methods based on crimping fail when the pressure in the vessel should be increased to the values required for carbon dioxide storage vessels. To overcome these difficulties, sealing of the vessel should be done by welding rather than crimping.

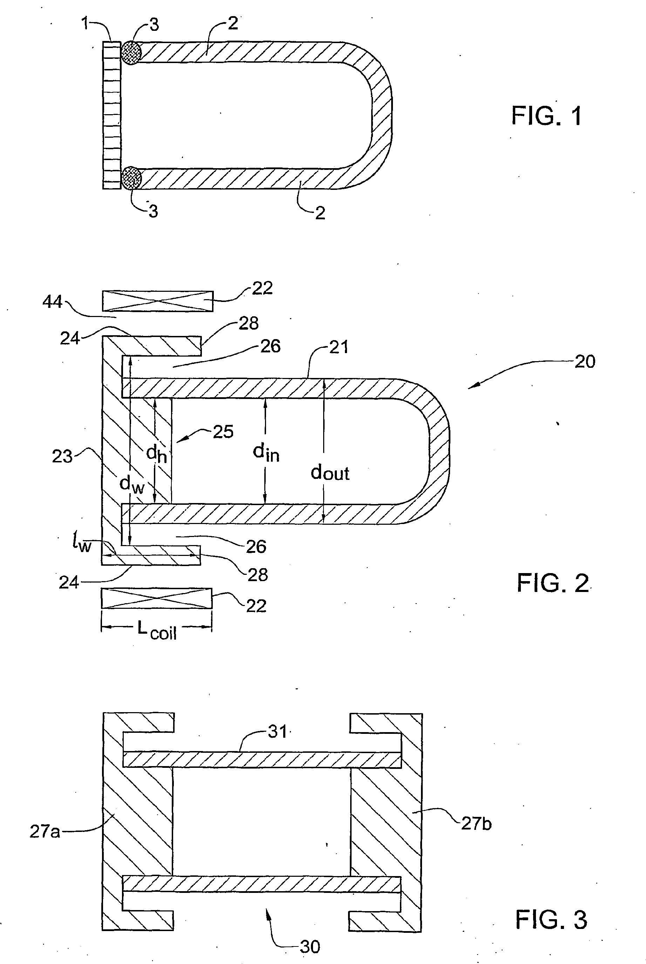

**Fig. 1** illustrates an example when a cylindrical vessel's body **2** is sealed by a cover **1** by using a fusion welding technique at high temperature. One of the drawbacks of the fusion welding technique is in the fact that a heat affected zone **3** is formed due to the high temperature. The mechanical and metallurgical properties of the material at the heat affected zone **3** may differ significantly from the properties of the original material that deteriorates the quality and performance of the sealed vessel. In particular, it may require the use of thick vessel walls for storage of carbon dioxide at high pressure.

It is known in the art (see, for example, U.S. Pat. No. 5,824,998 to the Assignee of this application) that pulsed magnetic forming techniques can be used not only for crimping as described above in U.S. Pat. Nos. 3,581,456; 4,934,552; 5,191,775 and 5,671,522, but also for cold welding two metal workpieces without forming annealed transition zones.

A magnetic pulse technique for sealing a vessel by welding is described in WO 05002777 assigned to the Assignee of the present Application. The method includes providing a vessel's body having an open end, and a cover that includes a welding part and a brim part. A diameter of the cover at the welding part is less than the diameter of the vessel's body for providing an air gap between the vessel's body and the welding part. The cover is placed within said open end of the vessel's body. A welding induction coil is provided around the vessel's body at the place where the welding part of the cover is located. The welding induction coil is energized to generate a pulsed magnetic force sufficient to cause bending a portion of the vessel's body in a radially inward direction around the cover in the air gap. The pulsed magnetic force has such a value so as to provide mutual diffusion of atoms of the vessel's body and the cover at their impact, thereby to weld the vessel's body and the cover to each other.

Although the method described in WO 05002777 can be used for sealing high pressure vessels, application of this method is limited to specific vessel configurations, when the cover is placed inside the vessel's body.

## SUMMARY OF THE INVENTION

Despite the prior art in the area of sealing containers by magnetic pulse forming techniques, there is still a need in the art for, and it would be useful to have, novel methods of sealing high pressure vessels by utilizing magnetic pulse force (PMF) providing mutual diffusion of atoms between a vessel body and a cover.

Thus, according to one broad aspect of the invention there is provided a pulsed magnetic method of sealing a vessel according to claim 1.

As defined in the present invention, the working voltage $U$ is obtained by

$$U = kV_r \sqrt{\frac{r_w l_w h_c \delta_w \rho_w}{h_g C}} \,,$$

where $\rho_w$, $r_w$, $\delta_w$ and $l_w$ are the material density (in kg/m$^3$), inner radius, thickness and length (in m) of the welding part, correspondingly, $h_g$ is the thickness (in m) of the annular air gap, $h_c$ is the thickness (in m) of the clearance between the induction coil and the welding part, $L_{coil}$ is a longitudinal dimension of the coil **22** in the working zone (e.g., $L_{coil} \geq l_w$), $C$ is the capacitance (in F) of an energy storage bank of a pulsed welding apparatus (not shown), $V_r$ is the velocity (in m/sec) of the of the cover's welding part in the radial direction at the impact, and $k$ is an empirical coefficient that can vary its value in the range of 3 to 15.

According to an embodiment of the present invention the energy $W$ required for welding the vessel's body to the welding part of the cover can be obtained by

$$W = 2\pi V_r^2 r_w h_c l_w \delta_w \rho_w / h_g$$

According to an embodiment of the present invention, a resilient o-ring is placed in the gap between the cover and the vessel's body prior to the energizing of the welding induction coil.

According to another aspect of the invention there is provided a pulsed magnetic method of sealing a vessel

According to a further embodiment of the present invention, the method further comprises:

  providing at least one additional sealing cylinder;
  applying said at least one additional sealing cylinder over said sealing cylinder; and
  joining the additional sealing cylinder with said sealing cylinder.

According to this other aspect of the invention, the working voltage $U$ is obtained by

$$U = kV_r \sqrt{\frac{r_{cyl} l_{cyl} h_c \delta_{cyl} \rho_{cyl}}{h_g C}} \, ,$$

where $\rho_{cyl}$; $r_{cyl}$, $\delta_{cyl}$ and $l_{cyl}$ are the material density (in $kg/m^3$), inner radius, thickness and length (in m) of the sealing cylinder, correspondingly, $h_g$ is the thickness (in m) of the annular air gap, $h_c$ is the thickness (in m) of a clearance between the induction coil and the sealing cylinder, $C$ is the capacitance (in F) of an energy storage bank of a pulsed welding apparatus, $V_r$ is the velocity (in m/sec) of the of the sealing cylinder in the radial direction at the impact, and $k$ is an empirical coefficient.

According to another embodiment of this other aspect of the invention, the energy $W$ required for welding the vessel's body (21) to the sealing cylinder is obtained by

$$W = k^2 V_r^2 r_{cyl} h_c l_{cyl} \rho_{cyl} \delta_{cyl} / h_g$$

The sealing methods of the present invention have many of the advantages of the aforementioned techniques, while simultaneously overcoming some of the disadvantages normally associated therewith.

Examples of applications of the sealing technique of the present invention include, but are not limited to, producing such parts of air conditioning systems as air accumulators, air dryers, air receivers, etc.

For example, a sealed vessel fabricated by the method of the present invention can be used for storing compressed carbon dioxide.

There has thus been outlined, rather broadly, the more important features of the invention in order that the detailed description thereof that follows hereinafter may be better understood. Additional details and advantages of the invention will be set forth in the detailed description, and in part, will be appreciated from the description, or may be learned by practice of the invention.

**BRIEF DESCRIPTION OF THE DRAWINGS**

In order to understand the invention and to see how it may be carried out in practice, a preferred embodiment will now be described, by way of nonlimiting example only, with reference to the accompanying drawings, in which:

  **Fig. 1** is a cross-sectional view of a vessel after a sealing by a diffused welding process;
  **Fig. 2** illustrates a cross-sectional view of a vessel before a sealing process, according to one embodiment of the invention;
  **Fig. 3** illustrates a cross-sectional view of a vessel before a sealing process, according to another embodiment of the invention;
  **Figs. 4A through 4D** illustrate a sequence of stages of the welding process, according to an embodiment of the invention;
  **Figs. 5A and 5B** illustrate a cross-sectional view of a part of the vessel after a sealing process, according to yet another embodiment of the invention;

**Figs. 6A and 6B** illustrate two stages of the welding process of a vessel, according to still another embodiment of the invention;

**Fig. 6C** illustrates a cross-sectional view of a part of the vessel's portion after a sealing process, according to a further embodiment of the invention; and

**Fig. 7** illustrates a cross-sectional view of a part of the vessel's portion after a sealing process, according to yet another embodiment of the invention.

**DETAILED DESCRIPTION OF EXEMPLARY EMBODIMENTS**

The principles and operation of the methods according to the present invention may be better understood with reference to the drawings and the accompanying description, it being understood that these drawings are given for illustrative purposes only and are not meant to be limiting. The same reference numerals will be utilized for identifying those components which are common in the vessel and the working coil shown in the drawings throughout the present description of the invention. Dimensions of vessel, thickness of the walls of the vessel and cover as well as gaps between the vessel and cover and their portions may be exaggerated for clarity.

Referring to **Fig. 2,** a cross-sectional view of a vessel **20** before a welding process is illustrated, according to one embodiment of the invention. The vessel **20** includes a cylindrical vessel's body **21** having an open end and a cover **23.** The cover **23** has a welding part **24** that overlaps a portion of the cylindrical vessel's body **21.** The cover **23** has also a holding part **25** adapted to hold the cover **23** inside the vessel's body **21.** Therefore, a diameter $d_h$ of the cover **23** at the holding part **25** is equal to the inner diameter $d_{in}$ of the vessel's body **21.** According to the present invention, an inner diameter $d_w$ of the cover **23** at the welding part **24** is higher than the outer diameter $d_{out}$ of the vessel's body **21,** so as to provide an annular air gap **26** between the cylindrical vessel's body **21** and the cover's welding part **24,** when the cover **23** is placed into the open end of the vessel's body **21.** Preferably, the overlap between the welding part **24** and the cylindrical vessel's body **21** is more than two times greater than the thickness of the welding part **24.**

The vessel **20** may be constructed of any suitable metal material having the required strength and forming characteristics for the particular application. It should be appreciated that the vessel's body **21** and the cover **23** can be made of the same material or different materials. Examples of the metal materials from which the vessel's body **21** and the cover **23** are made include, but are not limited to, aluminum, low carbon steel, brass, copper. It should be appreciated that alloys of these and other materials can also be used.

In order to provide a force required for welding the cover **23** to the vessel's body **21,** a high power pulsed magnetic field is generated around the vessel's body **21** at the place where the cover's welding part **24** is located over the vessel's body **21.** A device suitable for providing a required pulsed magnetic field is known *per se,* and therefore its construction and operation will not be expounded hereinbelow. For example, the device described in U.S. Pat. No. 5,824,998 to the Assignee of this application can be used for the purpose of the present invention. Such a device includes a welding induction coil **22,** which can be configured in accordance with a specific application. In **Fig. 2** the welding induction coil **22** surrounds the vessel's body **21** at the place where the welding part **24** of the cover is located. When desired, a longitudinal dimension $L_{coil}$ of the coil **22** is greater than the longitudinal dimension $l_w$ of the welding part **24** and configured such that the pulsed magnetic force produced by the induction coil **22** for bending the cover's welding part **24** would be concentrated at an edge **28** of the welding part **24.** It should be noted that the joint area has a clearance **44** for the coil **22** surrounding the welding part **24.**

Referring to **Fig. 3,** a cross-sectional view of a vessel **30** before a welding process is illustrated, according to another embodiment of the invention. According to this embodiment, the cylindrical vessel **30** is open at two ends. Thus, covers **27a** and **27b** can be used to seal the vessel's body **31** at the two open ends, when desired.

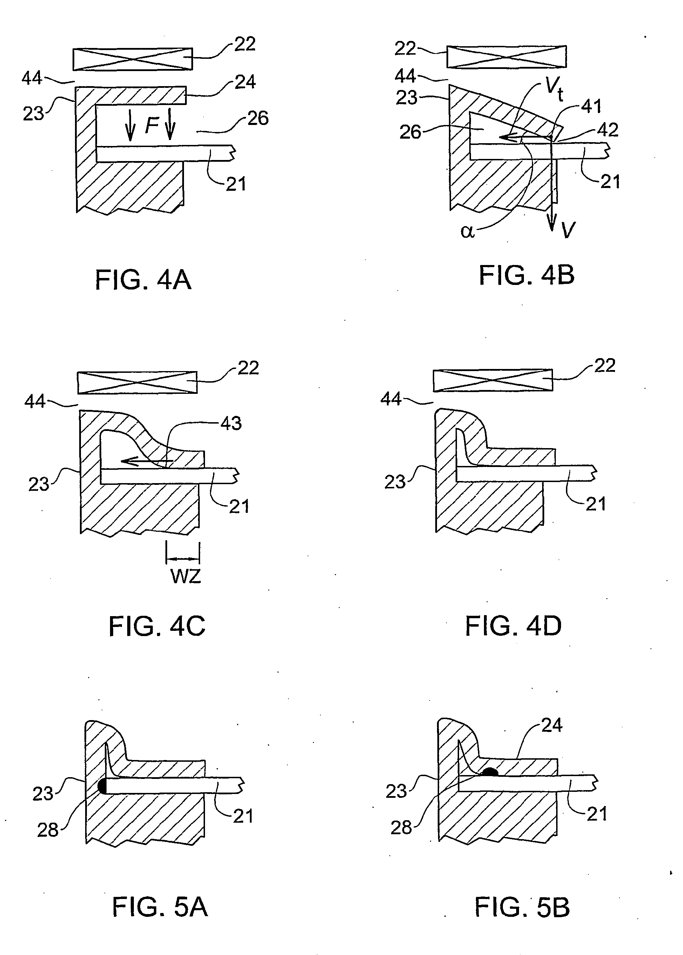

Referring to **Figs. 4A-4D,** a sequence of stages of the welding process is illustrated, according to an embodiment of the invention. It should be noted that these figures are not to scale, and are not in proportion, for purposes of clarity. In operation, a pulsed magnetic force **F**, associated with the magnetic field generated by the welding induction coil **22,** is applied to the welding part **24** of the cover **23** (see **Fig. 4A).** According to this embodiment, the welding part **24** is located near the open end of the vessel's body **21.** However, it should be understood that the location of the vessel's welding part **24** is not limited to any part of the vessel's body **21** along its length.

It should be noted that contrary to the prior art crimping techniques (where the joint portions are attached to each other before applying a pulsed magnetic field), the pulsed magnetic welding method of the present invention teaches to use the gap **26** between the cover's welding part **24** and the vessel's body **21.** Such a gap provides for the cover's welding part **24** a possibility to move under acceleration towards the vessel's body **21** to achieve a high velocity value sufficient for mutual diffusion of atoms of the vessel's body and the cover at their impact.

The process of welding the vessel for sealing thereof includes energizing the welding induction coil **22** to produce the pulsed magnetic force **F** for bending the cover's welding part **24** in a radially inward direction around the vessel's body **21.** The welding starts at the moment when an edge **41** of the welding part **24** contacts a surface **42** of the vessel's body **21** (see **Fig. 4B**). During the welding, the front contact line **43,** defining the welding zone **WZ** around the vessel's body **21**, moves tangentially towards the vessel's end (see **Fig. 4C),** thereby sealing the vessel (see **Fig. 4D**).

It should be understood that in order to provide mutual diffusion of the atoms required for the welding of the vessel's body to the cover at the high-velocity impact, the pulsed magnetic force **F** should have a predetermined value. More specifically, the pulsed magnetic force **F** must have such a value so that the cover's welding part **24**, during its accelerated motion in the gap **26** towards the surface **42** of the vessel's body **21,** could attain a velocity sufficient for penetration of the atoms of the vessel's body into the space between the atoms of the cover. Specifically, the applicants found that for the configuration of the cover's welding part **24** and the vessel's body **21** shown in **Figs. 1 and 2,** the welding is established, according to the present invention, when an effective value of the velocity $V_r$ of the cover's welding part **24** in the radial direction at the impact is in the range of about 150m/sec-600m/sec, whereas the apparent tangential velocity $V_t$ of the front contact line **43** in the joint area is in the range of about 1000m/sec-2500m/sec. The apparent tangential velocity $V_t$ can be obtained by $V_t = V_r/\tan \alpha,$ where $\alpha$ is the impact angle.

Under such controlled impact, a high-pressure collision is created between the two surfaces of the metals to be bonded. The atoms of the two adjacent metals are propelled together with such force that they actually overcome their natural repulsion forces and result in a stable equilibrium as they share electrons. The process uses pressure, not heat, and thereby avoids all the conventional heat-induced problems found in welding, such as phase changes, the formation of intermetallics, recrystallized grains, etc. The bond can even be stronger than the host materials themselves, as limit failure occurs in the weaker of the two metals and not at the bonded interface. The absence of heat in the process makes it possible to bond metals with widely different melting temperatures, e.g., aluminum and steel.

Moreover, owing to the high tangential velocity $V_t$ of the front contact line **43** a jet is created between the two bonded surfaces by the impact force acting upon them. This jetting action removes traces of oxides, surface contaminants and any dirt from the welding zone, allowing the magnetic pressure caused impact to plastically deform the metals for a short instant and to drive the mating surfaces together. This allows the two virgin surfaces, stripped of their oxide layers, to be welded together under very high pressure, bringing the atoms of each metal into close enough contact with each other, to allow the atomic forces of attraction to come into play.

The present invention defines physically justified direction for calculating in advance the voltage **U** applied across the induction coil **22**, and, in a preferred embodiment of the invention, the energy **W** required for welding the vessel's body **21** and the cover **23** to each other. Specifically, the predetermined voltage **U** and the energy **W** have to be such that (i) the welding part **24** of the cover **23** during its movement towards the vessel's body **21** attains at the impact a velocity value in the inward direction in the range of about 150m/sec to 600m/sec and (ii) a contact front line **43** attains at the impact a tangential velocity value in the range of about 1000m/sec to 2500m/sec".

Specifically, by taking into account the velocity values provided by the present invention, one should calculate the magnitude of the voltage **U** applied across the induction coil and/or the energy **W** required in order to weld the vessel's body **21** to the welding part **24** of the cover **23,** providing mutual diffusion of the atoms.

According to the present invention, the working voltage **U** required for welding the welding part **24** and vessel's body **21** is estimated by

$$U = kV_r\sqrt{\frac{r_w l_w h_c \delta_w \rho_w}{h_g C}},$$

where $\rho_w$, $r_w$, $\delta_w$ and $l_w$ are the material density (in kg/m$^3$), inner radius, thickness and length (in m) of the welding part **24,** correspondingly, $h_g$ is the thickness (in m) of the annular air gap **26**, $h_c$ is the thickness (in m) of the clearance **44** between the induction coil **22** and the welding part **24,** $L_{coil}$ is a longitudinal dimension of the coil **22** in the working zone (e.g., $L_{coil} \geq l_w$), **C** is the capacitance (in F) of an energy storage bank of a pulsed welding apparatus (not shown), $V_r$ is the velocity (in m/sec) of the of the cover's welding part **24** in the radial direction at the impact, and **k** is an empirical coefficient that can vary its value in the range of 2 to 20.

According to another preferred example of the invention, the energy **W** required for welding the body **21** to the welding part **24** of the cover **23** is further obtained by

$$W = k^2 V_r^2 r_w h_c l_w \delta_w \rho_w / h_g$$

-

For example, when the welding parameters are set to $\rho_w$= 2700kg/m$^3$ (Aluminum); $r_w$=0.02m; $h_c$=0.0015m; $h_g$=0.0015m; $l_w$=0.015m; $\delta_w$=0.002m; **C**=550$\mu$F; $V_t$=300m/s and **k**=10 the working voltage **U** equals to about 5kV, whereas the energy **W** required for welding equals to about 16 kJ.

Referring to **Fig. 5A and Fig. 5B**, cross-sectional views of joint areas after welding are illustrated, according to further embodiments of the invention. According to these embodiments, in order to enhance the sealing function, a resilient o-ring **28** is placed in the gap between the cover **23** and the vessel's body **21** prior to the energizing of the welding induction coil. According to the example shown in **Fig. 5A**, the o-ring **28** is placed at the butt end of the vessel's body **21.** However, when desired, the o-ring **28** can be placed at any other place between the cover's welding part **24** and the vessel's body **21** (see **Fig. 5B**).

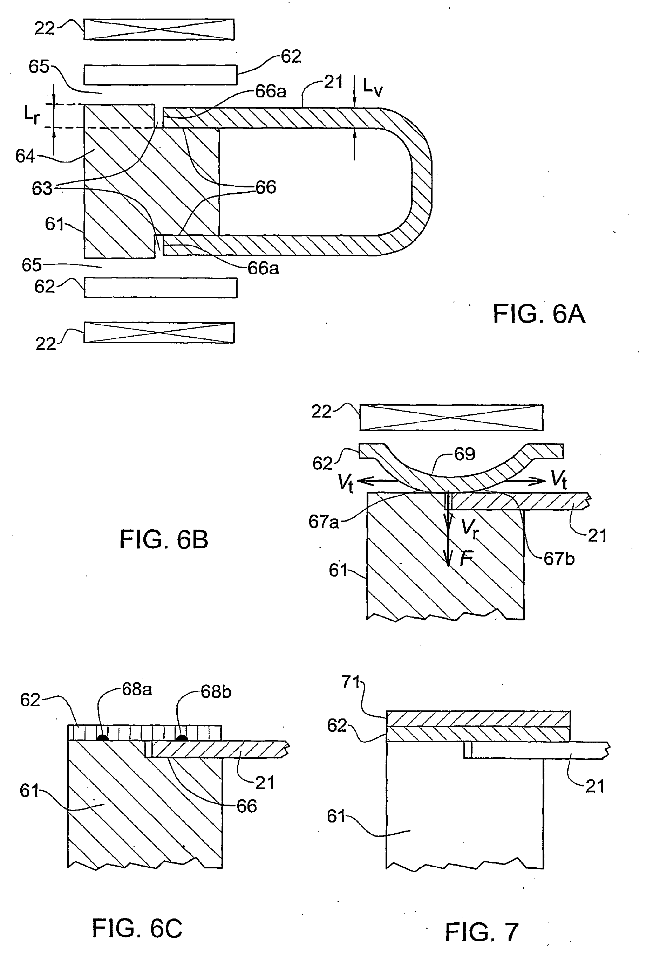

Referring to **Figs. 6A and 6B** together, two stages of the welding process of a vessel are illustrated, according to still another embodiment of the invention. According to this embodiment, the vessel's body **21** is jointed to a cover **61** by using a sealing cylinder **62.** In this case, the cover **61** has a recess **63** in which an end portion **66** of the vessel's body **21** is placed. Preferably, the depth $l_r$ of the recess **63** is equal to the thickness $l_v$ ($l_v = d_{out} - d_{in}$) of the vessel's body **21.** In such a construction, a diameter of the cover **61** at its butt end **64** is equal to the outer diameter of the vessel's body **21**.

As shown in **Fig. 6A**, the sealing cylinder **62** is placed over the cover **61** and the end portion **66** of the vessel's body **21** such that the cylinder **62** overlaps the cover **61** and the end portion **66** of the vessel's body **21.** A dimension of the cylinder is such that a gap **65** is provided between the inner surface of the sealing cylinder **62** and the cover **61** abutted to the end portion **66** of the vessel's body **21** placed in the recess **63.**

In order to weld the cover **61,** the vessel's body **21** and the cylinder **62** together, the welding induction coil **22** is placed around the sealing cylinder **62,** preferably, centered at the location of the butt end **66a** of the end portion **66.** Energizing of the coil **22** will cause bending of the cylinder **62** (see **Fig. 6B**) centered at this location.

According to this embodiment of the invention, the pulsed magnetic force **F** must have such a value so that a bending portion **69** of the sealing cylinder **62** during its movement in the gap **65** could attain a velocity in the radial direction sufficient for penetration of its atoms into the space between the atoms of the vessel's body **21** and the atoms of the cover **61,** thereby welding the cover **61,** the vessel's body **21** and the bending portion **69** of the cylinder **62** together. The high tangential velocity $V_t$ of the front lines **67a** and **67b** results in two opposite jets created between the two bonded surfaces. This jetting action removes traces of oxides, surface contaminants and any dirt from the welding zone, allowing the magnetic pressure caused impact to plastically deform the metals for a short instant and to drive the mating surfaces together. For example, welding according to this invention is established when an effective value of the velocity of the bending portion **69** of the sealing cylinder **62** in the radial direction at the impact is in the range of about 150m/sec-600m/sec, whereas the apparent tangential velocity $V_t$ of the front line in the joint area is in the range of about 1000m/sec-2500m/sec.

Values of the working voltage and energy required for welding, as well as the magnetic field $B$ in the gap **65** (calculated in Tesla) generated by the induction coil **22** can be calculated as described above.

According to the present invention, the working voltage $U$ is obtained by

$$U = kV_r \sqrt{\frac{r_{cyl} l_{cyl} h_c \delta_{cyl} \rho_{cyl}}{h_g C}} \, ,$$

where $\rho_{cyl}$, $r_{cyl}$, $\delta_{cyl}$ and $l_{cyl}$ are the material density (in kg/m³), inner radius, thickness and length (in m) of the sealing cylinder (62), correspondingly, $h_g$ is the thickness (in m) of the annular air gap (65), $h_c$ is the thickness (in m) of a clearance between the induction coil (22) and the sealing cylinder (62), $C$ is the capacitance (in F) of an energy storage bank of a pulsed welding apparatus, $V_r$ is the velocity (in m/sec) of the of the sealing cylinder (62) in the radial direction at the impact, and $k$ is an empirical coefficient.

According to a preferred example of the present invention, the energy $W$ required for welding the vessel's body (21) to the sealing cylinder (62) is further obtained by

$$W = k^2 V_r^2 r_{cyl} h_c l_{cyl} \rho_{cyl} \delta_{cyl} / h_g$$

When desired, in order to enhance the sealing function, resilient o-rings **68a** and **68b** can be placed between the cover **61** and the sealing cylinder **62,** and between the cover **61** and the end portion **66** of the vessel's body **21,** correspondingly, prior to the sealing process (see **Fig. 6C).**

Referring to **Fig. 7,** a cross-sectional view of a vessel after a sealing process is illustrated, according to yet another embodiment of the invention. According to this embodiment, a sealing process of the vessel's body **21** is carried out in two stages. At the first stage, a join of the vessel's body **21,** the cover **61** and the sealing cylinder **62** is achieved as described above with reference to **Figs. 6A** and **6B**. At the second stage, the sealing can be reinforced by applying an additional sealing cylinder **71** over the sealing cylinder **62.** In such a case the sealing wall will be composed of two cylinders, such as the sealing cylinders **62** and **71.**

According to one example, the additional sealing cylinder **71** is jointed with the sealing cylinder **62** by the welding process similar to the welding method described above for the cylinder **62.**

According to another example, the additional sealing cylinder **71** can be jointed with the sealing **cylinder 62** by any one of the prior art crimping methods described above in the background section.

It should be understood that when required, the sealing can be further enhanced by applying more than one additional cylinder (not shown), thereby increasing the total thickness of the sealing wall.

As such, those skilled in the art to which the present invention pertains, can appreciate that while the present invention has been described in terms of preferred embodiments, the concept upon which this disclosure is based may readily be utilized as a basis for the designing of other structures, systems and processes for carrying out the several purposes of the present invention as defined in the claims.

It is apparent that although the examples of the vessel were shown for the vessel body portion having a circular cross-section, the sealing method of the present invention can be applied, *mutates mutandis*, for the sealing of a vessel having an arbitrary cross-sectional shape.

Also, it is to be understood that the phraseology and terminology employed herein are for the purpose of description and should not be regarded as limiting.

In the process claims that follow, alphabetic characters used to designate claim steps are provided for convenience only and do not imply any particular order of performing the steps.

It is important, therefore, that the scope of the invention is not construed as being limited by the illustrative embodiments set forth herein. Other variations are possible within the scope of the present invention as defined in the appended claims.

**Claims**

1. A pulsed magnetic method of sealing a vessel, comprising:

   (a) providing a vessel's body (21) having at least one open end;
   (b) providing a cover (23) having a welding part (24);
   (c) placing the welding part (24) of the cover (23) over said at least one open end of the vessel's body (21) to overlap at least a portion of the vessel's body, thereby defining an air gap (26) between said portion of the vessel's body (21) and the welding part (24) of the cover (23);
   (d) providing a welding induction coil (22) around said vessel's body at least at the place where the welding part (24) of the cover (23) is located; and **characterized by**
   (e) energizing said welding induction coil (22) by applying a working voltage *U* thereacross having a predetermined value required to generate a pulsed magnetic force sufficient to cause bending the welding part (24) of the cover (23) in said air gap (26) in a radially inward direction around said portion of the vessel's body (21), said predetermined value of the working voltage has such a value so as to provide (i) an effective radial velocity value of the cover's welding part (24) in the range of 150m/sec to 600m/sec at the moment of impact with the vessel's body (21), and (ii) an apparent tangential velocity of a front contact line (43) in the joint area in the range of 1000m/sec-2500m/sec; thereby to provide mutual diffusion of atoms of the vessel's body (24) and the cover (23) at their impact;

   wherein said working voltage *U* required for welding the welding part (24) and vessel's body (21) is obtained by

   $$U = kV_r \sqrt{\frac{r_w l_w h_c \delta_w \rho_w}{h_g C}},$$

   where $\rho_w$, $r_w$, $\delta_w$, and $l_w$ are the material density (in kg/m$^3$), inner radius, thickness and length (in m) of the welding part (24), correspondingly, $h_g$ is the thickness (in m) of the annular air gap (26), $h_c$ is the thickness (in m) of the clearance (44) between the induction coil (22) and the welding part (24), *C* is the capacitance (in F) of an energy storage bank of a pulsed welding apparatus, $V_r$ is the velocity (in m/sec) of the of the cover's welding part (24) in the radial direction at the impact, and *k* is an empirical coefficient.

2. The method of claim 1, wherein an energy *W* required for welding the vessel's body (21) to the welding part (24) of the cover (23) is obtained by

$$W = 2\pi V_r^2 r_w h_c l_w \delta_w \rho_w / h_g$$

where $\rho_w$, $r_w$, $\delta_w$ and $l_w$ are the material density (in kg/m$^3$), inner radius, thickness and length (in m) of the welding part (24), correspondingly, correspondingly, $h_g$ is the thickness (in m) of the annular air gap (26), $h_c$ is the thickness (in m) of the clearance (44) between the induction coil (22) and the welding part (24), $V_r$ is the velocity (in m/sec) of the of the cover's welding part (24) in the radial direction at the impact, and k is an empirical coefficient.

3. The method of claim 1 or 2, wherein $k$ is in the range of 2 to 20.

4. The method of any one of claims 1 to 3, comprising placing a resilient o-ring (28) in the gap between the cover (23) and the vessel's body (21) prior to said energizing of the welding induction coil (22).

5. The method according to any one of the preceding claims, further comprising storing compressed carbon dioxide in said vessel after sealing.

6. A pulsed magnetic method of sealing a vessel, comprising:

(a) providing a vessel's body (21) having at least one open end;
(b) providing a cover (61) having a recess (63) adapted for placing an end portion (66) of the vessel's body (21) therein;
(c) placing said at least one open end (66) into the recess (63); **characterized by**
(d) providing a sealing cylinder (62) over the cover (61) and said end portion (66) of the vessel's body (21) placed in the recess (63) such that the cylinder (62) overlaps the cover (61) and the end portion (66) of the vessel's body (21), thereby defining an air gap (65) therebetween;
(e) providing a welding induction coil (22) around said sealing cylinder (62) at least at the place where the cover (61) and the end portion (66) of the vessel's body (21) are located; and
(f) energizing said welding induction coil (22) by applying a working voltage $U$ thereacross having a predetermined value required to generate a pulsed magnetic force sufficient to cause bending of the sealing cylinder (62) in said air gap in a radially inward direction, said predetermined value of the working voltage has such a value so as to provide (i) an effective radial velocity value of a bending portion (69) of the cylinder (62) in the range of 150m/sec to 600m/sec at the moment of impact with said cover (61) and said end portion (66) of the vessel's body (21), and (ii) an apparent tangential velocity of front contact lines in the joint area is in the range of 1000m/sec-2500m/sec; thereby to provide mutual diffusion of atoms of bending portion (69) of the sealing cylinder (62) with atoms of the cover (61) and the vessel's body (21) at their impact;

wherein said working voltage $U$ is obtained by

$$U = kV_r \sqrt{\frac{r_{cyl} l_{cyl} h_c \delta_{cyl} \rho_{cyl}}{h_g C}} \,,$$

where $\rho_{cyl}$, $r_{cyl}$, $\delta_{cyl}$, and $l_{cyl}$ are the material density (in kg/m$^3$), inner radius, thickness and length (in m) of the sealing cylinder (62), correspondingly, $h_g$ is the thickness (in m) of the annular air gap (65), $h_c$ is the thickness (in m) of a clearance between the induction coil (22) and the sealing cylinder (62), $C$ is the capacitance (in F) of an energy storage bank of a pulsed welding apparatus, $V_r$ is the velocity (in m/sec) of the of the sealing cylinder (62) in the radial direction at the impact, and $k$ is an empirical coefficient.

7. The method of claim 6, wherein an energy $W$ required for welding the vessel's body (21) to the sealing cylinder (62) is obtained by

$$W = k^2 V_r^2 r_{cyl} h_c l_{cyl} \rho_{cyl} \delta_{cyl} / h_g$$

where $\rho_{cyl}$, $r_{cyl}$, $\delta_{cyl}$ and $I_{cyl}$ are the material density (in kg/m$^3$), inner radius, thickness and length (in m) of the sealing cylinder (62), correspondingly, $h_g$ is the thickness (in m) of the annular air gap (65), $h_c$ is the thickness (in m) of a clearance between the induction coil (22) and the sealing cylinder (62), $V_r$ is the velocity (in m/sec) of the of the sealing cylinder (62) in the radial direction at the impact, and $k$ is an empirical coefficient.

8. The method of claim 6 or 7, wherein $k$ is in the range of 2 to 20.

9. The method of any one of claims 6 to 8, comprising placing two resilient o-rings (68a and 68b) in said air gap (65) prior to said energizing of said welding induction coil (22).

10. The method of claim 6, further comprising:

   providing at least one additional sealing cylinder (71);
   applying said at least one additional sealing cylinder (71) over said sealing cylinder (62);
   joining the additional sealing cylinder (71) with said sealing cylinder (62).


**Patentansprüche**

1. Impulsmagnetisches Verfahren zum Abdichten eines Behälters, umfassend:

   (a) Bereitstellen eines Behälterkörpers (21) mit wenigstens einem offenen Ende;
   (b) Bereitstellen einer Abdeckung (23) mit einem Schweißteil (24);
   (c) Anordnen des Schweißteils (24) der Abdeckung (23) über dem wenigstens einen offenen Ende des Behälterkörpers (21), um wenigstens einen Abschnitt des Behälterkörpers zu überlappen, wodurch ein Luftspalt (26) zwischen dem Abschnitt des Behälterkörpers (21) und dem Schweißteil (24) der Abdeckung (23) bestimmt wird;
   (d) Bereitstellen einer Schweißinduktionsspule (22) um den Behälterkörper wenigstens an der Stelle, wo sich das Schweißteil (24) der Abdeckung (23) befindet; und **gekennzeichnet durch**
   (e) Erregen der Schweißinduktionsspule (22) **durch** Anlegen einer Arbeitsspannung U darüber mit einem vorbestimmten Wert, der zum Erzeugen einer impulsmagnetischen Kraft erforderlich ist, welche ausreicht, um ein Biegen des Schweißteils (24) der Abdeckung (23) in dem Luftspalt (26) in radial einwärtiger Richtung um den Abschnitt des Behälterkörpers (21) zu bewirken, wobei der vorbestimmte Wert der Arbeitsspannung einen geeigneten Wert hat, um (i) einen effektiven radialen Geschwindigkeitswert des Schweißteils (24) der Abdeckung im Bereich von 150 m/s bis 600 m/s im Moment des Zusammentreffens mit dem Behälterkörper (21) und (ii) eine scheinbare Tangentialgeschwindigkeit einer vorderen Kontaktlinie (43) in dem Verbindungsbereich im Bereich von 1000 m/s - 2500 m/s bereitzustellen; um **dadurch** eine gegenseitige Diffusion von Atomen des Behälterkörpers (24) und der Abdeckung (23) bei ihrem Zusammentreffen bereitzustellen;

   wobei die zum Verschweißen des Schweißteils (24) und des Behälterkörpers (21) erforderliche Arbeitsspannung $U$ sich aus

$$U = kV_r \sqrt{\frac{r_w I_w h_c \delta_w \rho_w}{h_g C}}$$

   ergibt, wobei $\rho_w$, $r_w$, $\delta_w$ und $I_w$ jeweils die Materialdichte (in kg/m$^3$), der Innenradius, die Dicke und die Länge (in m) des Schweißteils (24) sind, $h_g$ die Dicke (in m) des ringförmigen Luftspalts (26) ist, $h_c$ die Dicke (in m) des Abstandes (44) zwischen der Induktionsspule (22) und dem Schweißteil (24) ist, $C$ die Kapazität (in F) einer Energiespeicherbank einer Impulsschweißvorrichtung ist, $V_r$ die Geschwindigkeit (in m/s) des Schweißteils (24) der Abdeckung in radialer Richtung beim Zusammentreffen ist und $k$ ein empirischer Koeffizient ist.

2. Verfahren gemäß Anspruch 1, wobei eine zum Schweißen des Behälterkörpers (21) an das Schweißteil (24) der Abdeckung (23) erforderliche Energie $W$ sich aus

$$W = 2\pi V_r^2 r_w h_c l_w \delta_w \rho_w / h_g$$

ergibt, wobei $\rho_w$, $r_w$, $\delta_w$ und $l_w$ jeweils die Materialdichte (in kg/m$^3$), der Innenradius, die Dicke und die Länge (in m) des Schweißteils (24) sind, $h_g$ die Dicke (in m) des ringförmigen Luftspalts (26) ist, $h_c$ die Dicke (in m) des Abstandes (44) zwischen der Induktionsspule (22) und dem Schweißteil (24) ist, $V_r$ die Geschwindigkeit (in m/s) des Schweißteils (24) der Abdeckung in radialer Richtung beim Zusammentreffen ist und $k$ ein empirischer Koeffizient ist.

3. Verfahren gemäß Anspruch 1 oder 2, wobei $k$ im Bereich von 2 bis 20 liegt.

4. Verfahren gemäß einem der Ansprüche 1 bis 3, umfassend, vor dem Erregen der Schweißindüktionsspule (22) einen elastischen O-Ring (28) in dem Spalt zwischen der Abdeckung (23) und dem Behälterkörper (21) anzuordnen.

5. Verfahren gemäß einem der vorhergehenden Ansprüche, weiterhin umfassend, nach dem Abdichten komprimiertes Kohlendioxid in dem Behälter zu speichern.

6. Impulsmagnetisches Verfahren zum Abdichten eines Gefäßes, umfassend:

(a) Bereitstellen eines Behälterkörpers (21) mit wenigstens einem offenen Ende;
(b) Bereitstellen einer Abdeckung (61) mit einer Ausnehmung (63), die zum Anordnen eines Endabschnitts (66) des Behälterkörpers (21) darin geeignet ist;
(c) Anordnen des wenigstens einen offenen Endes (66) in der Ausnehmung (63); **gekennzeichnet durch**
(d) Bereitstellen eines Abdichtzylinders (62) über der Abdeckung (61) und dem in der Ausnehmung (63) angeordneten Endabschnitt (66) des Behälterkörpers (21) in der Weise, dass der Zylinder (62) die Abdeckung (61) und den Endabschnitt (66) des Behälterkörpers (21) überlappt, wodurch ein Luftspalt (65) dazwischen bestimmt wird;
(e) Bereitstellen einer Schweißinduktionsspule (22) um den Abdichtzylinder (62) wenigstens an der Stelle, wo sich die Abdeckung (61) und der Endabschnitt (66) des Behälterkörpers (21) befinden; und
(f) Erregen der Schweißinduktionsspule (22) **durch** Anlegen einer Arbeitsspannung $U$ darüber mit einem vorbestimmten Wert, der zum Erzeugen einer impulsmagnetischen Kraft erforderlich ist, welche ausreicht, um ein Biegen des Abdichtzylinders (62) in dem Luftspalt in radial einwärtiger Richtung zu bewirken, wobei der vorbestimmte Wert der Arbeitsspannung einen geeigneten Wert hat, um (i) einen effektiven radialen Geschwindigkeitswert eines Biegeabschnitts (69) des Zylinders (62) im Bereich von 150 m/s bis 600 m/s im Moment des Zusammentreffens mit der Abdeckung (61) und dem Endabschnitt (66) des Behälterkörpers (21) und (ii) eine scheinbare Tangentialgeschwindigkeit von vorderen Kontaktlinien in dem Verbindungsbereich im Bereich von 1000 m/s - 2500 m/s bereitzustellen; um **dadurch** eine gegenseitige Diffusion von Atomen des Biegeabschnitts (69) des Abdichtzylinders (62) mit Atomen der Abdeckung (61) und des Behälterkörpers (21) bei ihrem Zusammentreffen bereitzustellen;

wobei die Arbeitsspannung $U$ sich aus

$$U = kV_r \sqrt{\frac{r_{cyl} l_{cyl} h_c \delta_{cyl} \rho_{cyl}}{h_g C}}$$

ergibt, wobei $\rho_{cyl}$, $r_{cyl}$, $\delta_{cyl}$ und $l_{cyl}$ jeweils die Materialdichte (in kg/m$^3$), der Innenradius, die Dicke und die Länge (in m) des Abdichtzylinders (62) sind, $h_g$ die Dicke (in m) des ringförmigen Luftspalts (65) ist, $h_c$ die Dicke (in m) eines Abstandes zwischen der Induktionsspule (22) und dem Abdichtzylinder (62) ist, $C$ die Kapazität (in F) einer Energiespeicherbank einer Impulsschweißvorrichtung ist, $V_r$ die Geschwindigkeit (in m/s) des Abdichtzylinders (62) in radialer Richtung beim Zusammentreffen ist und $k$ ein empirischer Koeffizient ist.

**7.** Verfahren gemäß Anspruch 6, wobei eine zum Schweißen des Behälterkörpers (21) an den Abdichtzylinder (62) erforderliche Energie *W* sich aus

$$W = k^2 V_r^2 r_{cyl} h_c l_{cyl} \rho_{cyl} \delta_{cyl} / h_g$$

ergibt, wobei $\rho_{cyl}$, $r_{cyl}$, $\delta_{cyl}$ und $l_{cyl}$ jeweils die Materialdichte (in kg/m$^3$), der Innenradius, die Dicke und die Länge (in m) des Abdichtzylinders (62) sind, $h_g$ die Dicke (in m) des ringförmigen Luftspalts (65) ist, $h_c$ die Dicke (in m) eines Abstandes zwischen der Induktionsspule (22) und dem Abdichtzylinder (62) ist, $V_r$ die Geschwindigkeit (in m/s) des Abdichtzylinders (62) in radialer Richtung beim Zusammentreffen ist und *k* ein empirischer Koeffizient ist.

**8.** Verfahren gemäß Anspruch 6 oder 7, wobei *k* im Bereich von 2 bis 20 liegt.

**9.** Verfahren gemäß einem der Ansprüche 6 bis 8, umfassend, vor dem Erregen der Schweißinduktionsspule (22) zwei elastische O-Ringe (68a und 68b) in dem Luftspalt (65) anzuordnen.

**10.** Verfahren gemäß Anspruch 6, weiterhin umfassend:

Bereitstellen wenigstens eines zusätzlichen Abdichtzylinders (71);
Aufbringen des wenigstens einen zusätzlichen Abdichtzylinders (71) über dem Abdichtzylinder (62);
Verbinden des zusätzlichen Abdichtzylinders (71) mit dem Abdichtzylinder (62).

**Revendications**

**1.** Un procédé magnétique pulsé de scellage de récipient, comprenant

(a) fournir un corps de récipient (21) ayant au moins une extrémité ouverte
(b) fournir un couvercle (23) ayant une pièce de soudage (24)
(c) placer la pièce de soudage (24) du couvercle (23) sur ladite au moins une extrémité ouverte du corps de récipient (21) pour chevaucher au moins une portion du corps de récipient ainsi définissant un entrefer (26) entre ladite portion du corps de récipient (21) et la pièce de soudage (24) du couvercle (23) ;
(d) fournir une bobine d'induction de soudage (22) autour dudit corps de récipient au moins à la place où la pièce de soudage (24) du couvercle (23) est localisée et **caractérisé par**
(e) exciter ladite bobine d'induction de soudage (22) en y appliquant une tension de fonctionnement U ayant une valeur prédéterminée requise pour générer une force magnétique pulsée suffisante pour provoquer la flexion de la pièce de soudage (24) du couvercle (23) dans ledit entrefer (26) dans une direction radialement vers l'intérieur autour de ladite portion du corps de récipient (21), ladite valeur prédéterminée de la tension de fonctionnement a une telle valeur de sorte à fournir (i) une valeur de vitesse radiale effective de la pièce de soudage (24) du couvercle dans la fourchette de 150 m/sec à 600 m/sec au moment de l'impact avec le corps de récipient (21) et (ii) une vitesse tangentielle apparente d'une ligne de contact frontale (43) dans la zone de jointure dans la fourchette de 1000 m/sec à 2500 m/sec ; par là fournir une diffusion mutuelle d'atomes du corps de récipient (24) et du couvercle (23) à leur impact ;

où ladite tension de fonctionnement U requise pour souder la pièce de soudage (24) et le corps de récipient (21) est obtenue par

$$U = k V_r \sqrt{\frac{r_w l_w h_c \delta_w \rho_w}{h_g C}}$$

où $\rho_w$, $r_w$ $\delta_w$ et $l_w$ sont la densité de matériau (en kg/m$^3$), le rayon intérieur, l'épaisseur et la longueur (en m) de la pièce de soudage (24) de manière correspondante $h_g$ est l'épaisseur (en m) de l'entrefer annulaire (26), $h_c$ est l'épaisseur (en m) du jeu (44) entre la bobine d'induction (22) et la pièce de soudage (24), C est la capacitance (en F) d'une banque de stockage d'énergie d'un appareil de soudage pulsé, V est la vitesse (en m/sec) de la pièce de soudage (24) du couvercle dans la direction radiale à l'impact et k est un coefficient empirique.

2. Le procédé de la revendication 1 où une énergie W requise pour souder le corps de récipient (21) à la pièce de soudage (24) du couvercle (23) est obtenue par

$$W = 2\pi V_r^2 r_w h_c l_w \delta_w \rho_w / h_g$$

où $\rho_w$ $r_w$ $\delta_w$ et $l_w$ sont la densité de matériau (en kg/m$^3$), le rayon intérieur, l'épaisseur et la longueur (en m) de la pièce de soudage (24) de manière correspondante $h_g$ est l'épaisseur (en m) de l'entrefer annulaire (26), $h_c$ est l'épaisseur (en m) du jeu (44) entre la bobine d'induction (22) et la pièce de soudage (24), $V_r$ est la vitesse (en m/sec) de la pièce de soudage (24) du couvercle dans la direction radiale à l'impact et k est un coefficient empirique.

3. Le procédé de la revendication 1 ou 2 où k est dans la fourchette de 2 à 20.

4. Le procédé de l'une des revendications 1 à 3 comprenant le placement d'une bague -O élastique (28) dans l'espace entre le couvercle (23) et le corps de récipient (21) avant ladite excitation de la bobine d'induction de soudage (22).

5. Le procédé selon l'une des revendications précédentes comprenant de plus le stockage de dioxyde de carbone comprimé dans ledit récipient après scellage.

6. Un procédé magnétique pulsé de scellage d'un récipient comprenant :

(a) fournir un corps de récipient (21) ayant au moins une extrémité ouverte
(b) fournir un couvercle (61) ayant un évidement (63) adapté pour placer une portion d'extrémité (66) du corps de récipient (21) ci-dedans
(c) placer ladite au moins une extrémité ouverte (66) dans l'évidement (63) **caractérisé par**
(d) fournir un cylindre de scellage (62) sur le couvercle (61) et ladite portion d'extrémité (66) du corps de récipient (21) placé dans l'évidement (63) de sorte que le cylindre (62) chevauche le couvercle (61) et la portion d'extrémité (66) du corps de récipient (21) par là définissant un entrefer (65) entre eux,
(e) fournir une bobine d'induction de soudage (22) autour du cylindre de scellage (62) au moins à la place où le couvercle (61) et la portion d'extrémité (66) du corps de récipient (21) sont localisés ; et
(f) exciter ladite bobine d'induction de soudage (22) en appliquant une tension de fonctionnement U en travers ayant une valeur prédéterminée requise pour générer une force magnétique pulsée suffisante pour provoquer la flexion du cylindre de scellage (62) dans ledit entrefer dans une direction radialement vers l'intérieur, ladite valeur prédéterminée de la tension de fonctionnement a une telle valeur de sorte à fournir (i) une valeur de vitesse radiale effective d'une portion de flexion (69) du cylindre (62) dans la fourchette de 150 m/sec à 600 m/sec au moment de l'impact avec ledit couvercle (61) et ladite portion d'extrémité (66) du corps de récipient (21) et (ii) une vitesse tangentielle apparente de lignes de contact frontales (43) dans la zone de jointure est dans la fourchette de 1000 m/sec - 2500 m/sec ; par là fournir une diffusion mutuelle d'atomes de la portion de flexion (69) du cylindre de soudage (62) avec des atomes du couvercle (61) et du corps de récipient (21) à leur impact ;

où ladite tension de fonctionnement U est obtenue par

$$U = kV_r \sqrt{\frac{r_{cyl} l_{cyl} h_c \delta_{cyl} \rho_{cyl}}{h_g C}}$$

où $\rho_{cyl}$ $r_{cyl}$ $\delta_{cyl}$ et $l_{cyl}$ sont la densité de matériau (en kg/m$^3$), le rayon intérieur, l'épaisseur et la longueur (en m) du cylindre de scellage (62) de manière correspondante $h_g$ est l'épaisseur (en m) de l'entrefer annulaire (65), $h_c$ est l'épaisseur (en m) d'un jeu entre la bobine d'induction (22) et le cylindre de scellage (62), C est la capacitance (en F) d'une banque de stockage d'énergie d'un appareil de soudage pulsé, $V_r$ est la vitesse (en m/sec) du cylindre de scellage (62) dans la direction radiale à l'impact et k est un coefficient empirique.

**7.** Le procédé de la revendication 6 où une énergie W requise pour souder le corps de récipient (21) au cylindre de scellage (62) est obtenue par

$$W = k^2 V_r^2 r_{cyl} h_c l_{cyl} \rho_{cyl} \delta_{cyl} / h_g$$

où $\rho_{cyl}$ $r_{cyl}$ $\delta_{cyl}$ et $l_{cyl}$ sont la densité de matériau (en kg/m$^3$), le rayon intérieur, l'épaisseur et la longueur (en m) du cylindre de scellage (62) de manière correspondante $h_g$ est l'épaisseur (en m) de l'entrefer annulaire (65), $h_c$ est l'épaisseur (en m) d'un jeu entre la bobine d'induction (22) et le cylindre de scellage (62), V est la vitesse (en m/sec) du cylindre de scellage (62) dans la direction radiale à l'impact et k est un coefficient empirique.

**8.** Le procédé de la revendication 6 ou 7 où k est dans la fourchette de 2 à 20.

**9.** Le procédé de l'une des revendications 6 à 8 comprenant le placement de deux bagues-O élastique (68a et 68b) dans ledit entrefer (65) avant ladite excitation de la bobine d'induction de soudage (22).

**10.** Le procédé selon la revendication 6 comprenant de plus
fournir au moins un cylindre de scellage additionnel (71)
appliquer ledit au moins un cylindre additionnel (71) sur ledit cylindre de scellage (62) joindre le cylindre de scellage additionnel (71) audit cylindre de scellage (62).

**FIG. 1**

**FIG. 2**

**FIG. 3**

**FIG. 4A**

**FIG. 4B**

**FIG. 4C**

**FIG. 4D**

**FIG. 5A**

**FIG. 5B**

FIG. 6A

FIG. 6B

FIG. 6C

FIG. 7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5671522 A
- EP 1649963 A
- US 3581456 A, Gere
- US 4934552 A, Koide
- US 5191775 A, Shiina
- US 5824998 A
- WO 05002777 A